# EUROPEAN PATENT APPLICATION

(11) **EP 4 283 431 A1**
(43) Date of publication of application: **29.11.2023**
(21) Application number: 22742122.9
(22) Date of filing: 17.01.2022
(51) Int. Cl.: G05D 1/02

(54) **AUTOMATED GUIDED VEHICLE**

(30) Priority: 22.01.2021 CN 202110093033
(71) Applicant: Hangzhou Hikrobot Co., Ltd., Hangzhou, Zhejiang 310051 (CN)
(72) Inventor: XIE, Bin, Hangzhou, Zhejiang 310051 (CN); BAI, Han, Hangzhou, Zhejiang 310051 (CN); WU, Yonghai, Hangzhou, Zhejiang 310051 (CN)
(74) Representative: Epping - Hermann - Fischer
(86) International application number: PCT/CN2022/072389
(87) International publication number: WO 2022/156643

(57) **Abstract**

An automated guided vehicle. The automated guided vehicle comprises a vehicle body (1), a track (2), a fork arm (3), a driving connecting rod (4), a supporting connecting rod (5) and a driving mechanism (6). The track (2) is provided on the vehicle body (l); the track (2) comprises a top track (21), a first side track (22) and a second side track (23); a top end of the first side track (21) is connected to a first end of the top track (21), a top end of the second side track (23) is connected to a second end of the top track (21), the first side track (22) and the second side track (23) incline downwards in opposite directions; a transmission part which is connected to the driving mechanism (6) and can run along the track (2) is provided in the track (2); a first end of the driving connecting rod (4) is hinged to the transmission part, and a second end is hinged to a first end of the fork arm (3); a second end of the fork arm (3) is hinged to a first end of the supporting connecting rod (5), and a second end of the supporting connecting rod (5) is hinged to a bottom end of the second side track (23) or a second end of the supporting connecting rod (5) is hinged to the vehicle body (1).

## Description

The present application claims the priority to a Chinese patent application No. 202110093033.5 filed with the China National Intellectual Property Administration on January 22, 2021 and entitled "Automated Guided Vehicle", which is incorporated herein by reference in its entirety.

### Technical Field

The present disclosure relates to the technical field of material handling, and in particular, to an automated guided vehicle.

### Background

Automated Guided Vehicles (AGV for short), also known as automatic guided vehicles, refer to transport vehicles equipped with automatic navigation devices such as electromagnetic or optical automatic navigation devices, capable of driving along a prescribed navigation path, with safety protection and various transfer functions.

The automated guided vehicle of the related art needs to be equipped with a set of power sources for each of horizontal deployment and retreat function and vertical lifting and descending function, which makes a power cost of the automated guided vehicle relatively high.

### Summary

In view of above, embodiments of the present disclosure provide an automated guided vehicle with low power cost.

An embodiment of the present disclosure provides an automated guided vehicle, including a vehicle body, a track, a fork arm, a driving connecting rod, a supporting connecting rod and a driving mechanism; wherein the track is provided on the vehicle body; the track includes a top track, a first side track and a second side track; a top end of the first side track is connected to a first end of the top track, a top end of the second side track is connected to a second end of the top track, and the first side track and the second side track are inclined downwards in opposite directions, respectively; a transmission part connected to the driving mechanism and capable of running along the track is provided in the track; a first end of the driving connecting rod is hinged to the transmission part, and a second end of the driving connecting rod is hinged to a first end of the fork arm; a second end of the fork arm is hinged to a first end of the supporting connecting rod, a second end of the supporting connecting rod is hinged to a bottom end of the second side track or the second end of the supporting connecting rod is hinged to the vehicle body; and the transmission part, when run in the track, drives the first end of the driving connecting rod to move along the track, and the second end of the driving connecting rod pushes the fork arm, and the fork arm is moved out of the vehicle body from a high position and descends to a low position under the push of the driving connecting rod and support of the supporting connecting rod.

According to one specific implementation of the embodiment of the present disclosure, the vehicle body includes a vehicle frame and a goods supporting part provided on the vehicle frame; the track is provided at a side of the goods supporting part, wherein, the bottom end of the first side track and the bottom end of the second side track are provided on the vehicle frame, the top track is located at the side of the goods supporting part, and a top of the top track is higher than a top of the goods supporting part; the transmission part, when run in the track, drives the first end of the driving connecting rod to move along the track; when the first end of the driving connecting rod runs from the bottom end of the first side track to the second end of the top track, the second end of the driving connecting rod pushes the fork arm, the first end of the fork arm moves from the first end of the top track to the second end of the top track, and the second end of the fork arm is moved out of the vehicle body; when the first end of the driving connecting rod runs from the second end of the top track to the bottom end of the second side track, the fork arm is moved out of the vehicle body and descends from the high position to the low position under the push of the driving connecting rod and the support of the supporting connecting rod.

According to a specific implementation of the embodiment of the present disclosure, the supporting connecting rod comprises a first connecting rod, a second connecting rod and a third connecting rod; a first end of the first connecting rod is hinged to the bottom end of the second side track or a first end of the first connecting rod is hinged to the vehicle body; a second end of the first connecting rod is hinged to a first end of the second connecting rod; a second end of the second connecting rod is hinged to the fork arm; a first end of the third connecting rod is slidably provided on the first connecting rod and a second end of the third connecting rod is hinged to the second connecting rod.

According to a specific implementation of the embodiment of the present disclosure, the second connecting rod includes a first rod, a second rod and a third rod; a first end of the first rod is hinged to the second end of the first connecting rod, a second end of the first rod is hinged to a first end of the second rod; a second end of the second rod is hinged to a first end of the third rod; the second end of the third rod is hinged to the fork arm; the second end of the third connecting rod is hinged to the second rod.

According to a specific implementation of the embodiment of the present disclosure, when the first end of the first connecting rod is hinged to the bottom end of the second side track, a fourth connecting rod is hinged between the bottom end of the second side track and the first end of the first connecting rod; or when the first end of the first connecting rod is hinged to the vehicle body, a fourth connecting rod is hinged between the vehicle body and the first end of the first connecting rod; and a length of the fourth connecting rod is smaller than a length of the first connecting rod.

According to a specific implementation of the embodiment of the present disclosure, a fifth connecting rod is hinged between the second end of the second connecting rod and the fork arm.

According to a specific implementation of the embodiment of the present disclosure, a first roller wheel that can roll along an upper surface of the top track is provided at the second end of the second connecting rod.

According to a specific implementation of the embodiment of the present disclosure, a second roller wheel that can roll along an upper surface of the top track is provided at the first end of the fork arm and/or at the second end of the driving connecting rod.

According to a specific implementation of the embodiment of the present disclosure, the transmission part includes a chain, or a synchronous belt, or a steel wire rope, and the driving mechanism includes a driving motor that is connected with the transmission part, or is connected with the transmission part through a reduction mechanism.

According to a specific implementation of the embodiment of the present disclosure, the track includes a track body, and the track body includes a top track body, and a first waist track body and a second waist track body respectively connected to two ends of the top track body; track grooves are provided at a side of the track body, wherein the track groove of the top track body forms the top track, the track groove of the first waist track body forms the first side track, and the track groove of the second waist track body forms the second side track.

According to a specific implementation of the embodiment of the present disclosure, the track further includes a bottom track, and the top track, the first side track, the bottom track and the second side track are connected end to end to form a trapezoidal structure.

According to a specific implementation of the embodiment of the present disclosure, the track includes a trapezoidal track body, and track grooves are provided at a side of the track body, wherein the track groove at top of the track body forms the top track, the track groove at a first waist of the track body forms the first side track, and the track groove at bottom of the track body forms the bottom track, and the track groove at a second waist of the track body forms the second side track.

According to a specific implementation of the embodiment of the present disclosure, a first stop block is provided at the second end of the driving connecting rod, and a second stop block is provided at the first end of the fork arm; when an angle between the driving connecting rod and the fork arm is a predetermined angle, the first stop block and the second stop block abut against each other, so that the angle between the driving connecting rod and the fork arm remains the predetermined angle; wherein, the predetermined angle is greater than or equal to 160 degrees and less than or equal to 200 degrees.

The automated guided vehicle provided in the embodiments of the present disclosure drives the transmission part through a driving mechanism to allow the transmission part to run in the track, thus driving the driving connecting rod to move in the track, and the driving connecting rod pushes the fork arm to be gradually moved out of the vehicle body and descended. The present disclosure combines the horizontal deployment and retreat movement of and the vertical lifting and descending movement of the fork arm into an arc-shaped movement by one set of power sources, reducing the number of the power sources and lowering the power cost.

### Brief Description of the Drawings

In order to more clearly describe the technical solutions of the examples of the disclosure and the prior art, accompanying drawings that need to be used in the examples and the prior art will be briefly described below. Obviously, accompanying drawings described below are for only some of embodiments of the disclosure. Those skilled in the art may also obtain other accompanying drawings based on these accompanying drawings without any creative efforts.
Fig. 1 is a schematic structural view of an automated guided vehicle according to an embodiment of the present disclosure;
Fig. 2 is a schematic structural view of a track and a fork arm in the automated guided vehicle shown in Fig. 1;
Figs. 3A-3H are diagrams of states when the automated guided vehicle is operating;
Figs. 4A-4D are diagrams of states when the automated guided vehicle is carrying a tray;
Fig. 5 is a schematic structural view of an automated guided vehicle according to another embodiment of the present disclosure.

Description of reference numbers:
1-vehicle body; 11-vehicle frame; 12-goods supporting part;
2-track; 21-top track; 22-first side track; 23-second side track; 231-rib plate; 24-bottom track;
3-fork arm; 4-driving connecting rod;
5-supporting connecting rod; 51-first connecting rod; 52-second connecting rod; 521-first rod; 522-second rod; 523- third rod; 53-third connecting rod;
6-driving mechanism; 7-fourth connecting rod; 8-fifth connecting rod;
91-first universal wheel; 92- first differential steering wheel; 93- second universal wheel; 94- second differential steering wheel; 95- third universal wheel.

### Detailed Description

Embodiments of the present application will be described in detail below with reference to the accompanying drawings.

Apparently, the described embodiments are only some, but not all, embodiments of the present disclosure. Based on the embodiments in the present disclosure, all other embodiments obtained by those of ordinary skill in the art without creative efforts shall fall within the protection scope of the present disclosure.

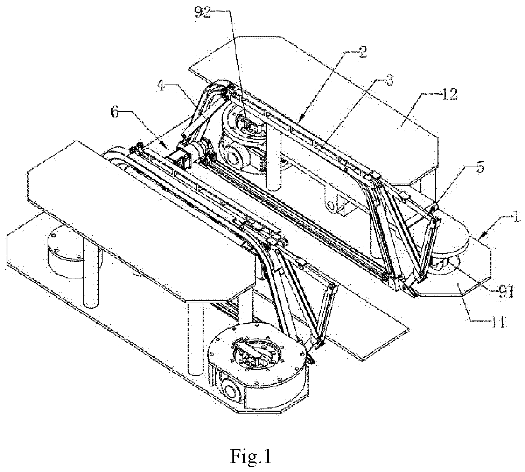

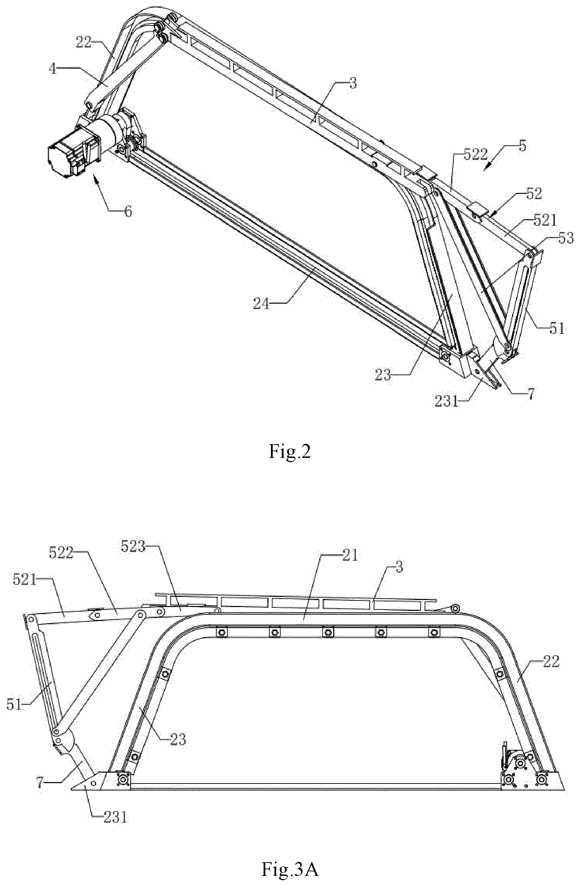

As shown in Fig. 1 and Fig. 2, an embodiment of the present disclosure provides an automated guided vehicle, which can include a vehicle body 1, a track 2, a fork arm 3, a driving connecting rod 4, a supporting connecting rod 5 and a driving mechanism 6.

The track 2 is provided on the vehicle body 1; the track 2 can include a top track 21, a first side track 22 and a second side track 23; the top end of the first side track 22 is connected to a first end of the top track 21, and the top end of the second side track 23 is connected to a second end of the top track 21. The first side track 22 and the second side track 23 are inclined downwards in opposite directions, respectively.

A transmission part, which is connected to the driving mechanism 6 and capable of running along the track 2, is provided in the track 2. A first end of the driving connecting rod 4 is hinged to the transmission part, and a second end of the driving connecting rod 4 is hinged to a first end of the fork arm 3. A second end of the fork arm 3 is hinged to a first end of the supporting connecting rod 5, and a second end of the supporting connecting rod 5 is hinged to the bottom end of the second side track 23 or the second end of the supporting connecting rod 5 is hinged to the vehicle body 1.

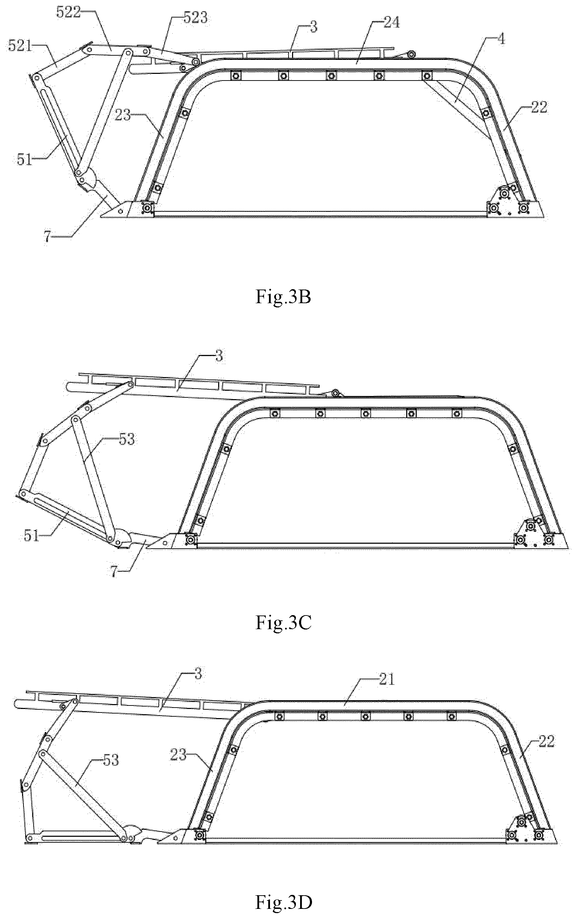

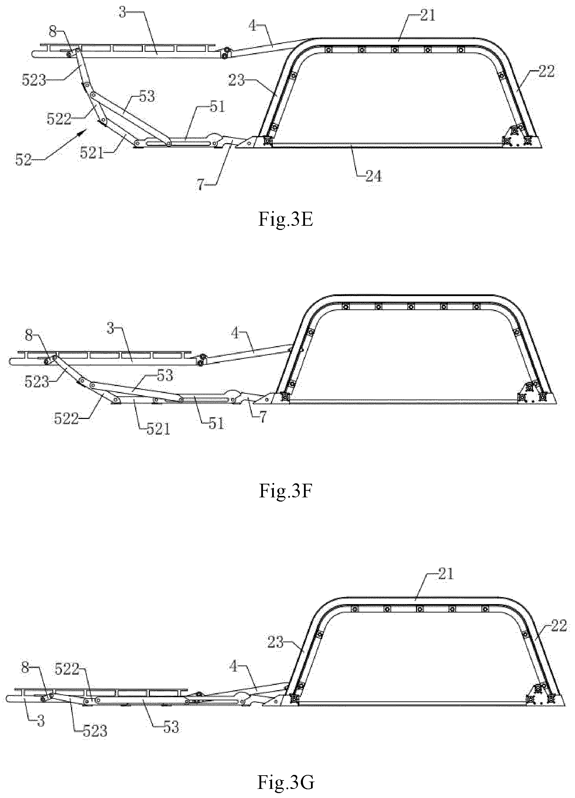

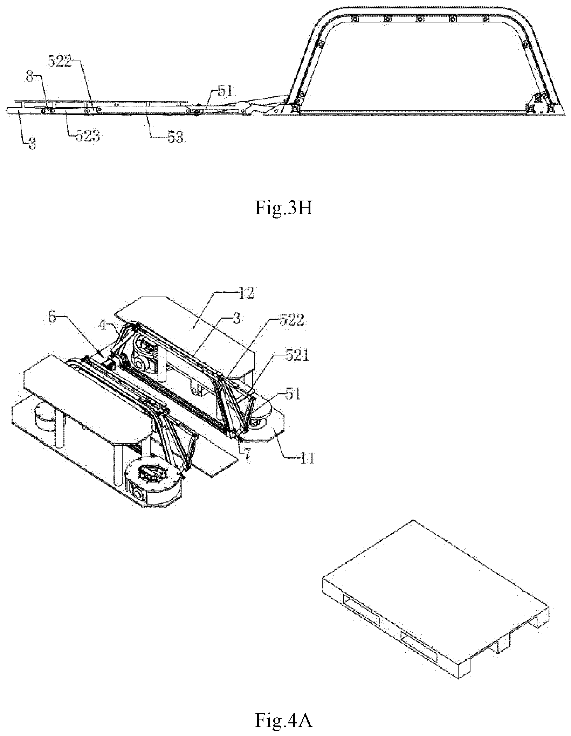

As shown in Figs. 3A-3H, the transmission part, when run in the track 2, drives the first end of the driving connecting rod 4 to move along the track 2. The second end of the driving connecting rod 4 pushes the fork arm 3, and the fork arm 3 is moved out of the vehicle body 1 from a high position and descends to a low position under the push of the driving connecting rod 4 and support of the supporting connecting rod 5.

In some embodiments of the present disclosure, the horizontal deployment and retreat movement and the vertical lifting and descending movement of the fork arm 3 are combined into an arc-shaped movement, and only one set of power sources is needed to make the fork arm 3 move horizontally and vertically. Compared with the related art in which the horizontal movement and vertical movement of the fork arm 3 are driven respectively by different power sources, the present disclosure reduces the number of power sources and power cost while making the structure of the automated guided vehicle more compact, saving installation space and providing higher work efficiency.

As shown in Fig. 3A, in some embodiments of the present disclosure, the top track 21, the first side track 22 and the second side track 23 are integrally formed, and an arc-shaped transition is formed between the first side track 22 and the top track 21, and an arc-shaped transition is formed between the top track 21 and the second side track 23, so that the transmission part runs more smoothly in the track 2.

As shown in Fig. 1, in some embodiments of the present disclosure, the vehicle body 1 includes a vehicle frame 11 and a goods supporting part 12 provided on the vehicle frame 11.

The vehicle frame 11 and the goods supporting part 12 are connected by four spaced connecting columns. Bottom ends of the connecting columns are connected to the vehicle frame 11, and top ends of the connecting columns are connected to the goods supporting part 12. In some embodiments, the number of the connecting columns can be determined according to factors such as an actual weight of goods to be transported or a support strength of the goods supporting part 12 and so on, and the connecting columns can also be replaced by or used in combination with connecting rods, connecting plates, and the like, which are not limited in this embodiment.

The goods supporting part 12 can be a supporting plate and/or a supporting rod, and the like, which is not limited in the embodiment. In some embodiments of the present disclosure, the supporting plate is used as the goods supporting part 12. A contact area between the supporting plate and the goods is larger, which allows the goods to be placed more stably. In actual use, it can be reasonably set according to factors such as a weight of the goods and a size of a tray to ensure the stability of the goods placement.

The track 2 is provided on the side of the goods supporting part 12, wherein the bottom ends of the first side track 22 and the second side track 23 are provided on the vehicle frame 11, the top track 21 is located at the side of the goods supporting part 12, and the top of the top track 21 is higher than the top of the goods supporting part 12.

In combination with Figs. 3A-3H, the transmission part, when run in the track 2, drives the first end of the driving connecting rod 4 to move along the track 2. When the first end of the driving connecting rod 4runs from the bottom end of the first side track 22 to the second end of the top track 21, the second end of the driving connecting rod 4 pushes the fork arm 3, the first end of the fork arm 3 moves from the first end of the top track 21 to the second end of the top track 21, and the second end of the fork arm 3 is moved out of the vehicle body 1.

When the first end of the driving connecting rod 4 runs from the second end of the top track 21 to the bottom end of the second side track 23, the fork arm 3 is moved out of the vehicle body 1 and simultaneously descends from a high position to a low position under the push of the driving connecting rod 4 and the support of the supporting connecting rod 5.

When the fork arm 3 is moved out of the vehicle body 1 and descends to a low position, the automated guided vehicle moves so that the fork arm 3 is moved into the tray at the bottom of the goods.

The transmission part, when run in a reverse direction in the track 2, drives the first end of the driving connecting rod 4 to move in the reverse direction along the track 2. When the first end of the driving connecting rod 4 runs from the bottom end of the second side track 23 to the second end of the top track 21, the fork arm 3 moves in a direction towards the vehicle body 1 and rises from the low position to the high position under the push of the driving connecting rod 4 and the support of the supporting connecting rod 5, and at the same time, the fork arm 3 drives the goods to move together and lift the goods from the ground to the high position.

When the first end of the driving connecting rod 4 runs from the second end of the top track 21 to the bottom end of the first side track 22, the driving connecting rod 4 pulls the fork arm 3, and the first end of the fork arm 3 moves from the second end of the top track 21 to the first end of the top track 21. The fork arm 3 is retreated into the vehicle body 1 again, and is located at the side of the top track 21. The tray moves from the second end of the top track 21 to the first end of the top track 21 together with the fork arm 3, and is located above the vehicle body. The fork arm 3 always supports the goods.

In order to reduce the support of the fork arm 3 to the goods and avoid damage of the fork arm 3 due to excessive load, a roller wheel is provided on the goods supporting part, and an elastic member is provided between the roller wheel and the goods supporting part. In this embodiment, the elastic member may be a spring.

When the goods move from the second end of the top track 21 to the first end of the top track 21, the bottom of the tray is always in contact with the roller wheel. Due to the existence of the spring, the tray will squeeze the roller wheel during the movement. The spring is compressed, and the bottom of the tray is kept in contact with the roller wheel, and at the same time, the supporting part provides an auxiliary supporting for the goods, so as to avoid serious wear or even damage of the fork arm due to that the entire weight of the goods is borne by the fork arm.

In some embodiments of the present disclosure, the supporting connecting rod 5 includes a first connecting rod 51, a second connecting rod 52 and a third connecting rod 53. A first end of the first connecting rod 51 is hinged to a bottom end of the second side track 23 or a first end of the first connecting rod 51 is hinged to the vehicle body 1. A second end of the first connecting rod 51 is hinged to a first end of the second connecting rod 52; a second end of the second connecting rod 52 is hinged to the fork arm 3. A first end of the third connecting rod 53 is slidably provided on the first connecting rod 51 and a second end of the third connecting rod 53 is hinged to the second connecting rod 52.

When the fork arm 3 is moved out of the vehicle body 1 gradually, the second connecting rod 52 moves in an arc-shape in a direction away from the vehicle body 1 and towards the ground under the push of the fork arm 3. The movement of the second connecting rod 52 drives the first connecting rod 51 to move in a direction away from the vehicle body 1. At the same time, the first end of the third connecting rod 53 slides from the first end to the second end of the first connecting rod 51 along the first connecting rod 51. Here, the first end of the first connecting rod 51 is an end hinged to the bottom end of the second side track, and the second end of the first connecting rod 51 is an end hinged to the second connecting rod.

In some embodiments of the present disclosure, long grooves extending along a length direction of the first connecting rod 51 are respectively provided on both sides of the first connecting rod 51, and the first end of the third connecting rod 53 is fitted with the long grooves on the first connecting rod 51 through a pin shaft, so that the third connecting rod 53 can slide along the long grooves. Here, the pin shaft can also be replaced by a roller wheel, a slider, and the like, which is not limited in this embodiment.

As shown in Figs. 3A-3H, in order to allow the fork arm 3 to move more smoothly, the second connecting rod 52 includes a first rod 521, a second rod 522 and a third rod 523. A first end of the first rod 521 is hinged to the second end of the first connecting rod 51, and a second end of the first rod 521 is hinged to a first end of the second rod 522. A second end of the second rod 522 is hinged to a first end of the third rod 523. A second end of the third rod 523 is hinged to the fork arm 3, and the second end of the third connecting rod 53 is hinged to the second rod 522.

The greater the number of rods, the smaller the swing of the fork arm 3 in the vertical direction and the more stable the movement of the fork arm 3, thus reducing a risk of goods slipping off the fork arm 3. This embodiment adopts a three-connecting rod structure. In actual use, an appropriate number of rods can be selected under the premise of ensuring that the goods will not slip off the fork arm 3 according to the actual situation.

In some embodiments of the present disclosure, a third stop block is pr5ovided at the second end of the first rod 521, and a fourth stop block is provided at the first end of the second rod 522. When an angle between the first rod 521 and the second rod 522 is a first angle, the third stop block abuts against the fourth stop block so that the angle between the first rod and the second rod remains the first angle, wherein the first angle ranges from 150° to 180°, preferably 165°-180°.

A fifth stop block is provided at the second end of the second rod 522, and a sixth stop block is provided at the first end of the third rod 523. When an angle between the second rod 522 and the third rod 523 is a second angle, the fifth stop block abuts against the sixth limiting block so that the angle between the second rod and the third rod remains the second angle, wherein the second angle ranges from 140° to 180°, preferably 150°-180°.

By defining the range of the first angle and the second angle, it can be ensured that the connection between individual rods is stable, and it can be further ensured that the fork arm 3 tends to a horizontal state during running, so that the fork arm 3 is more stable during moving.

As shown in Fig. 3E, in some embodiments of the present disclosure, the first connecting rod 51 and the second side track 23 can also be hinged by a fourth connecting rod 7, or the first connecting rod 51 and the vehicle body 1 can also be hinged by a fourth connecting rod 7. Specifically, when the first connecting rod 51 is hinged to the second side track 23 by the fourth connecting rod 7, the fourth connecting rod 7 is hinged between the bottom end of the second side track 23 and the first end of the first connecting rod 51; when the first connecting rod 51 is hinged to the vehicle body 1 by the fourth connecting rod 7, the fourth connecting rod 7 is hinged between the vehicle body 1 and the first end of the first connecting rod 51; wherein, a length of the fourth connecting rod 7 is smaller than a length of the first connecting rod 51.

By arranging the fourth connecting rod 7 and making the length of the fourth connecting rod 7 less than the length of the first connecting rod 51, when the fork arm 3 drives the supporting connecting rod 5 to rotate and the supporting connecting rod 5 drives the fourth connecting rod 7 to rotate in the direction away from the second side track 23 and towards the ground, the fourth connecting rod 7 can quickly rotate and stick to the ground or stick to the vehicle body 1, so that the supporting connecting rod 5 supports the fork arm 3 more stably.

In some embodiments of the present disclosure, a seventh stop block is provided at the second end of the fourth connecting rod 7, and an eighth stop block is provided at the first end of the first connecting rod 51. When an angle between the fourth connecting rod 7 and the first connecting rod 51 is a third angle, the seventh stop block abuts against the eighth stop block, so that the angle between the fourth connecting rod and the first connecting rod remains the third angle, wherein the third angle ranges from 150° to 180°.

By defining the range of the third angle, it can be ensured that the connection between the fourth connecting rod 7 and the first connecting rod 51 is stable, and it can be further ensured that the fork arm 3 tends to a horizontal state during running, so that the fork arm 3 is more stable during moving.

In some embodiments of the present disclosure, when the fourth connecting rod 7 is hinged between the first connecting rod 51 and the bottom end of the second side track 23, two opposite ribs 231 are provided on the bottom end of the second side track 23. A certain space is formed between the two ribs 231, and the first end of the fourth connecting rod 7 is inserted and hinged between the two ribs 231.

By providing the two ribs 231, the stability between the track 2 and the vehicle body 1 is improved. At the same time, due to the existence of the ribs 231, the connection between the fourth connecting rod 7 and the second side track 23 is more convenient, which provides a certain space for the track 2 so as to allow the transmission part to run smoothly in the track 2.

As shown in Fig. 3E, in some embodiments of the present disclosure, the second end of the second connecting rod 52 and the fork arm 3 can also be hinged by a fifth connecting rod 8, and one end of the fifth connecting rod 8 is hinged to the second connecting rod 52, and the other end of the fifth connecting rod 8 is hinged to the fork arm.

By providing the fifth connecting rod 8, when the fork arm 3 drives the supporting connecting rod 5 to rotate, the fork arm 3 first drives the fifth connecting rod 8 to rotate, and then the fifth connecting rod 8 drives the supporting connecting rod 5 to rotate. The length of the fifth connecting rod 8 can be as short as possible, such the fork arm 3 drives supporting connecting rod 5 to rotate with less effort.

As shown in Fig. 2 , in some embodiments of the present disclosure, the track 2 includes a track body, and the track body includes a top track body and a first waist track body and a second waist track body respectively connected to two ends of the top track body;

Track grooves are provided at the side of the track body. The track groove of the top track body forms the top track 21, the track groove of the first waist track body forms the first side track 22, and the track groove of the second waist track body forms the second side track23.

The first waist track body, the top track body and the second waist track body are integrally formed. An arc-shaped transition is formed at the junction of the first waist track body and the top track body forms, and an arc-shaped transition is formed at the junction of the top track body and the second waist track body, such that the turning of track groove is smoother, and transmission part can also run more smoothly in the track groove, thereby improving the stability of the movement of the fork arm.

In another embodiment, the track 2 further includes a bottom track 24. The top track 21, the first side track 22, the bottom track 24 and the second side track 23 are connected end to end to form a trapezoidal structure.

The track 2 includes a trapezoidal track body, and track grooves are provided at the side of the track body. The track groove at the top of the track body forms the top track 21, the track groove at a first waist of the track body forms the first side track 22, the track groove at the bottom of the track body forms the bottom track 24, and the track groove at a second waist of the track body forms the second side track 23.

The transmission part can run along the first side track 22, the top track 21, the second side track 23, and the bottom track 24. The transmission part moves in a wider range and runs more stably.

In order to make the fork arm 3 more stable when being moved out of the vehicle body 1, a first roller wheel that can roll along an upper surface of the top track body is provided at the second end of the second connecting rod 52.

When the fork arm 3 moves from the first end to the second end of the top track 21, the first roller wheel always abuts against the upper surface of the top track body, and when a hinge point between the fork arm 3 and the fifth connecting rod 8 moves and is detached from the top track body, the first roller wheel is also detached from the top track body and no longer abuts against the upper surface of the top track body.

The first roller wheel provides a certain support for the fork arm 3 to make the movement of the fork arm 3 more stable, and when the fork arm 3 retracts into the vehicle body 1 along with the goods, the weight of the goods can also be applied to the top track 21 through the first roller wheel, to allow the top track 21 to provide a certain support for the goods, thus avoiding that the weight of the goods is entirely borne by the fork arm 3, which will result in wear on the fork arm 3 and reduce the service life of the fork arm 3.

In some embodiments of the present disclosure, a second roller wheel that can roll along the upper surface of the top track body is provided at the first end of the fork arm 3 and/or at the second end of the driving connecting rod 4.

When the fork arm 3 moves from the first end to the second end of the top track 21, the second roller wheel always abuts against the upper surface of the top track body, and when the first end of the fork arm 3 is completely moved out from the side of the top track body, the second roller wheel is also detached from the top track body and no longer abuts against the upper surface of the top track body.

When the first end of the fork arm 3 moves along the top track 21, the second roller wheel supports the fork arm 3, further improving the stability of movement of the fork arm 3, and at the same time, the second roller wheel allows the track 2 to bear a certain weight of the goods, thus avoiding the whole weight of the goods falling on the fork arm 3, and reducing wear on the fork arm 3.

In some embodiments of the present disclosure, the transmission part includes, but is not limited to, a chain, a synchronous belt, or a steel wire rope, which are not limited in this embodiment.

In some embodiments of the present disclosure, guide wheels are provided at the junction of the first side track and the top track and at the junction of the top track and the second side track. The transmission part is wound on the guide wheels, and the guide wheels provide a certain guiding for the movement of the transmission part, so that the transmission part moves in a specified direction.

In another embodiment, guide wheels are provided at the junction of the first side track and the bottom track and at the junction of the second side track and the bottom track. The transmission part is wound on the guide wheels, and the guide wheels provide a certain guiding for the movement of the transmission part.

In yet another embodiment, the first side track, the top track, the second side track and the bottom track are also provided with tensioning wheels spaced apart. The tensioning wheels are used to adjust the tension of the transmission part to allow the transmission part to run more smoothly, which in turn makes the fork arm more stable during movement.

The driving mechanism 6 includes a driving motor. When the driving motor is a stepping motor, an output shaft of the driving motor is connected with a driving wheel, and the driving wheel is connected with the transmission part to drive the transmission part to run.

When the driving motor is a three-phase asynchronous motor, the driving motor is connected to the transmission part through a reduction mechanism. Here, the reduction mechanism can be a reducer.

Reducer, also called reducing machine, is an independent component composed of gear transmission, worm transmission, and gear-worm transmission enclosed in a rigid shell, and is usually used as a reduction transmission device between a prime mover and a working machine. It plays the role of matching rotation speed and transmitting torque between prime mover and working machine or actuator.

A driving wheel is connected to an output shaft of the reducer, and the driving wheel is connected with the transmission part to drive the transmission part to run.

In some embodiments of the present disclosure, a first stop block is provided at the second end of the driving connecting rod 4, and a second stop block is provided at the first end of the fork arm 3. When an angle between the driving connecting rod 4 and the fork arm 3 is a predetermined angle, the first stop block and the second stop block abut against each other, so that the angle between the driving connecting rod 4 and the fork arm 3 remains the predetermined angle; wherein, the predetermined angle is greater than or equal to 160 degrees and less than or equal to 200 degrees.

The first end of the driving connecting rod 4 is hinged with the transmission part in the track. The transmission part, when run in the track 2, drives the first end of the driving connecting rod 4 to move along the track 2, and the second end of the driving connecting rod 4 pushes the fork arm 3 to move. When the driving connecting rod 4 pushes the fork arm 3 to move, the angle between the driving connecting rod 4 and the fork arm 3 gradually increases. In order to ensure that the goods do not slip off the fork arm 3 when the fork arm 3 carries the goods, a first stop block is provided at the second end of the driving connecting rod 4, and a second stop block is provided at the first end of the fork arm 3. When the first stop block and the second stop block abut against each other, the angle between the driving connecting rod 4 and the fork arm 3 is kept between 160° and 200°, so that the goods will not slide. Here, the angle between the driving connecting rod 4 and the fork arm 3 is preferably 180 degrees, because when the driving connecting rod 4 and the fork arm 3 are completely in the same plane, the goods placed on the fork arm 3 is the most stable. This embodiment does not limit the angle here, and a suitable angle range can be selected according to the actual situation under the premise of ensuring that the goods will not slip off.

In some embodiments of the present disclosure, supporting wheels are provided at the bottom of the fork arm 3. When the fork arm 3 is moved out from the vehicle body 1 and descends from the high position to the low position, the supporting wheels abut against the ground to support the fork arm 3. When the automated guided vehicle moves, the supporting wheels roll on the ground and support the fork arm 3, the automated guided vehicle will move more smoothly.

As shown in Fig. 1, in some embodiments of the present disclosure, the vehicle body 1 further includes a walking assembly, and the walking assembly includes a first universal wheel 91 and a first differential steering wheel 92. The first differential steering wheel 92 is provided on the first end of the vehicle frame 11, and the first universal wheel 91 is provided at the second end of the vehicle frame 11.

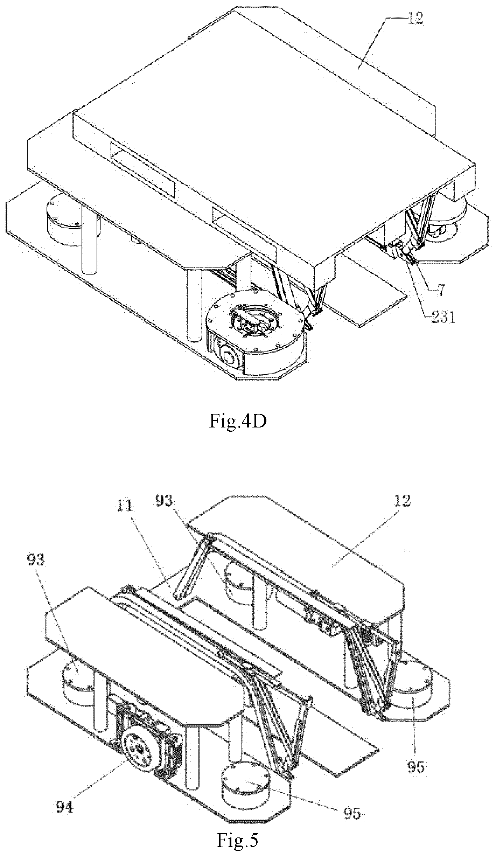

As shown in Fig. 5, alternatively, the walking assembly includes a second universal wheel 93, a second differential steering wheel 94 and a third universal wheel 95. The second universal wheel 93 is provided at the first end of vehicle frame 11, and the third universal wheel 95 is provided at the second end of the vehicle frame 11, and the second differential steering wheel 94 is provided on the vehicle frame 11 and located between the second universal wheel 93 and the third universal wheel 95.

In some embodiments of the present disclosure, the automated guided vehicle can further include a first-side automated guided vehicle and a second-side automated guided vehicle, and the first-side automated guided vehicle and the second-side automated guided vehicle are provided in parallel and at an interval, and are connected as a whole through a connecting part. At this time, the driving motor can also be a biaxial motor.

By providing the first-side automated guided vehicle and the second-side automated guided vehicle, larger goods can be placed on the goods supporting part 12 more stably. When the tray under the goods to be transported is small, the fork arm 3 on one side can be used to carry the goods up and places them on the goods supporting part 12 closest to the fork arm 3. When the tray under the goods to be transported is large, the fork arms 3 on both sides can be used together to transport the tray to the goods supporting parts 12 on both sides. This design can be applied to more goods of different sizes and is more practical.

In some embodiments of the present disclosure, the first universal wheel 91 on the first side automated guided vehicle and the first universal wheel 91 on the second side automated guided vehicle are provided diagonally, and the first differential steering wheel 92 on the first side automated guided vehicle and the first differential steering wheel 92 on the second side automated guided vehicle are diagonally provided, so that when the automated guided vehicle is turning, the speed on each side can be better controlled, which makes the turning more stable.

In some embodiments of the present disclosure, floating springs are provided on the first universal wheel 91 and the first differential steering wheel 92 on one side. The floating springs have a certain damping effect, which can ensure that the automated guided vehicles can pass smoothly on bad road surfaces to a certain extent, such as uneven road surfaces such as bumpy road surfaces and undulating road surfaces, etc.

In yet another embodiment, floating springs are provided on the second differential steering wheels 94 on both sides to ensure that the automated guided vehicle can pass smoothly on bad road surfaces to a certain extent, such as uneven road surfaces such as bumpy road surfaces and undulating road surfaces, etc.

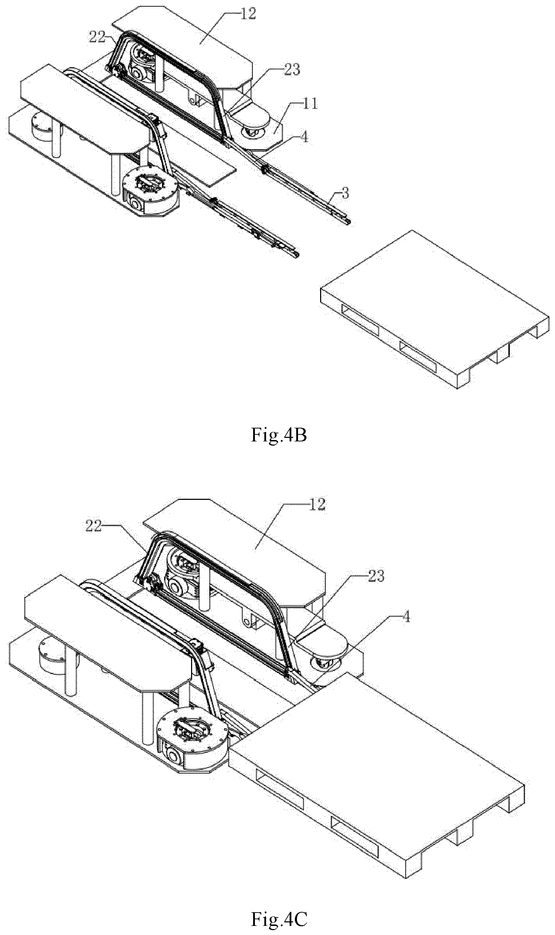

As shown in Figs. 3A-3H and Figs. 4A-4D, the working process of the automated guided vehicle provided by this embodiment is as follows: in an initial state (the initial state is a state in which the driving connecting rod 4, the fork arm 3 and the supporting connecting rod 5 have no movement or deployment), the walking assembly operates to drive the automated guided vehicle to move towards the tray and stop moving at a certain reserved safety distance, wherein the safety distance is greater than the maximum stroke of the fork arm 3 deployed in the horizontal direction.

The driving motor operates in a forward direction and the driving wheel rotates in the forward direction, which drives the transmission part to drive in the forward direction in the track 2 (wherein, the forward direction refers to a direction in which the first end of the driving connecting rod 4 moves from the first end of the first side track 22 to the second end of the second side track 23). The movement of the transmission part drives the first end of the driving connecting rod 4 to move in the forward direction, the second end of the driving connecting rod 4 pushes the first end of the fork arm 3, and the fork arm 3 moves in the forward direction under the push of the driving connecting rod 4 and the support of the supporting connecting rod 5.

During the movement of the first end of the driving connecting rod 4 from the bottom end of the first side track 22 to the second end of the top track 21, the fork arm 3 always moves toward the outside of the vehicle body 1 in a state tending to be horizontal, while the supporting connecting rod 5 gradually rotates from the rolled up state to the deployed state under the driving of the fork arm 3.

During the movement of the first end of the driving connecting rod 4 moves from the second end of the top track 21 to the bottom end of the second side track 23, the fork arm 3 continues to be moved out of the vehicle body 1 and moves downwards while the supporting connecting rod 5 continues to be deployed close to the ground under the driving of the fork arm 3.

When the first end of the driving connecting rod 4 moves to the bottom end of the second side track 23, the supporting wheels at the bottom of the fork arm 3 are supported on the ground, and the supporting connecting rod 5 is fully deployed to the ground.

The walking assembly continues to operate, and the automated guided vehicle continues to approach the tray until the fork arm 3 is fully moved into the bottom of the tray.

The driving motor operates in a reverse direction and the driving wheel rotates in the reverse direction, which drives the transmission part to drive in the reverse direction in the track 2. The movement of the transmission part drives the first end of the driving connecting rod 4 to move in the reverse direction, and the second end of the driving connecting rod 4 pulls the first end of the fork arm 3, and the fork arm 3 moves in the reverse direction under the pull of the driving connecting rod 4 and the support of the support connecting rod 5.

During the movement of the first end of the driving connecting rod 4 from the bottom end of the second side track 23 to the second end of the top track 21, the fork arm 3 retracts in a direction close to outside the vehicle body 1, and simultaneously moves upward, while the supporting connecting rod 5 gradually rolls back and leaves the ground under the driving of the fork arm 3.

During movement of the first end of the driving connecting rod 4 from the second end of the top track 21 to the bottom end of the first side track 22, the fork arm 3 always moves toward inside of the vehicle body 1 in a state tending to be horizontal, and the supporting connecting rod 5 continues to roll back under driving of the fork arm 3.

When the first end of the driving connecting rod 4 moved to the bottom of the first side track 22, the fork arm 3 retracts to the vehicle body 1. At this time, the tray is also placed on the goods support part 12, and the walking assembly operates to transport the tray to a predetermined location.

During transportation, the tray is completely supported by the goods supporting part 12, i.e., the vehicle body 1, so that the wear on the fork arm 3 can be reduced, and the cost of design, development and manufacturing can be saved.

The automated guided vehicle provided in this embodiment can complete the handling of goods through one set of power sources, reducing the number of power sources and manufacturing costs while making the structure of the automated guided vehicle more compact and saving installation space. The horizontal deployment and retreat movement and the vertical lifting and descending movement of the fork arm 3 are combined into an arc-shaped movement in this embodiment, which makes the handling more efficient compared with the related art in which the horizontal movement and vertical movement can only be completed sequentially.

It should be noted that, in the present disclosure, the emphases of the technical solutions described in the various embodiments are different, but there is a certain interrelated relationship between the various embodiments. In order to understand the solutions of the present disclosure, the various embodiments can be referred to each other. In addition, relational terms such as first and second are only used to distinguish one entity or operation from another entity or operation, and do not necessarily require or imply that there is an actual relationship between these entities or operations. Furthermore, the term "comprises", "include" or any other variation thereof is intended to cover a non-exclusive inclusion such that a process, method, article, or apparatus comprising a set of elements includes not only those elements, but also include other elements not expressly listed or also include elements inherent in such a process, method, article, or device. Without further limitations, an element defined by the phrase "comprising a ..." does not exclude the presence of additional identical elements in the process, method, article or apparatus comprising said element.

The above descriptions are only specific embodiments of the present disclosure, and are not intended to limit the present disclosure. Any modifications or replacements made by those of ordinary skills in the art within the spirit and principles of the present disclosure shall be included in the protection scope of the present disclosure. Therefore, the protection scope of the present disclosure should be determined by the protection scope of the claims.

## Claims

1. An automated guided vehicle, comprising a vehicle body, a track, a fork arm, a driving connecting rod, a supporting connecting rod and a driving mechanism, wherein:
the track is provided on the vehicle body; the track comprises a top track, a first side track and a second side track;
a top end of the first side track is connected to a first end of the top track, a top end of the second side track is connected to a second end of the top track, and the first side track and the second side track are inclined downwards in opposite directions, respectively;
a transmission part connected to the driving mechanism and capable of running along the track is provided in the track; a first end of the driving connecting rod is hinged to the transmission part, and a second end of the driving connecting rod is hinged to a first end of the fork arm; a second end of the fork arm is hinged to a first end of the supporting connecting rod, a second end of the supporting connecting rod is hinged to a bottom end of the second side track or the second end of the supporting connecting rod is hinged to the vehicle body; and
the transmission part, when run in the track, drives the first end of the driving connecting rod to move along the track, and the second end of the driving connecting rod pushes the fork arm, and the fork arm is moved out of the vehicle body from a high position and descends to a low position under the push of the driving connecting rod and support of the supporting connecting rod.

2. The automated guided vehicle according to claim 1, wherein, the vehicle body comprises a vehicle frame and a goods supporting part provided on the vehicle frame;
the track is provided at a side of the goods supporting part, wherein, the bottom end of the first side track and the bottom end of the second side track are provided on the vehicle frame, the top track is located at the side of the goods supporting part, and a top of the top track is higher than a top of the goods supporting part;
the transmission part, when run in the track, drives the first end of the driving connecting rod to move along the track; when the first end of the driving connecting rod runs from the bottom end of the first side track to the second end of the top track, the second end of the driving connecting rod pushes the fork arm, the first end of the fork arm moves from the first end of the top track to the second end of the top track, and the second end of the fork arm is moved out of the vehicle body;
when the first end of the driving connecting rod runs from the second end of the top track to the bottom end of the second side track, the fork arm is moved out of the vehicle body and descends from the high position to the low position under the push of the driving connecting rod and the support of the supporting connecting rod.

3. The automated guided vehicle according to claim 1, wherein, the supporting connecting rod comprises a first connecting rod, a second connecting rod and a third connecting rod;
a first end of the first connecting rod is hinged to the bottom end of the second side track or a first end of the first connecting rod is hinged to the vehicle body; a second end of the first connecting rod is hinged to a first end of the second connecting rod; a second end of the second connecting rod is hinged to the fork arm; a first end of the third connecting rod is slidably provided on the first connecting rod and a second end of the third connecting rod is hinged to the second connecting rod.

4. The automated guided vehicle according to claim 3, wherein, the second connecting rod comprises a first rod, a second rod and a third rod;
a first end of the first rod is hinged to the second end of the first connecting rod, a second end of the first rod is hinged to a first end of the second rod; a second end of the second rod is hinged to a first end of the third rod; the second end of the third rod is hinged to the fork arm; the second end of the third connecting rod is hinged to the second rod.

5. The automated guided vehicle according to claim 3, wherein, when the first end of the first connecting rod is hinged to the bottom end of the second side track, a fourth connecting rod is hinged between the bottom end of the second side track and the first end of the first connecting rod; or when the first end of the first connecting rod is hinged to the vehicle body, a fourth connecting rod is hinged between the vehicle body and the first end of the first connecting rod; and
a length of the fourth connecting rod is smaller than a length of the first connecting rod.

6. The automated guided vehicle according to claim 3, wherein, a fifth connecting rod is hinged between the second end of the second connecting rod and the fork arm.

7. The automated guided vehicle according to claim 3, wherein, a first roller wheel that can roll along an upper surface of the top track is provided at the second end of the second connecting rod.

8. The automated guided vehicle according to claim 1, wherein, a second roller wheel that can roll along an upper surface of the top track is provided at the first end of the fork arm and/or at the second end of the driving connecting rod.

9. The automated guided vehicle according to claim 1, wherein, the transmission part comprises a chain, or a synchronous belt, or a steel wire rope, and the driving mechanism comprises a driving motor that is connected with the transmission part, or is connected with the transmission part through a reduction mechanism.

10. The automated guided vehicle according to claim 1, wherein, the track comprises a track body, and the track body comprises a top track body, and a first waist track body and a second waist track body respectively connected to two ends of the top track body;
track grooves are provided at a side of the track body, wherein the track groove of the top track body forms the top track, the track groove of the first waist track body forms the first side track, and the track groove of the second waist track body forms the second side track.

11. The automated guided vehicle according to claim 1, wherein, the track further comprises a bottom track, and the top track, the first side track, the bottom track and the second side track are connected end to end to form a trapezoidal structure.

12. The automated guided vehicle according to claim 11, wherein, the track comprises a trapezoidal track body, and track grooves are provided at a side of the track body, wherein the track groove at top of the track body forms the top track, the track groove at a first waist of the track body forms the first side track, and the track groove at bottom of the track body forms the bottom track, and the track groove at a second waist of the track body forms the second side track.

13. The automated guided vehicle according to claim 1, wherein, a first stop block is provided at the second end of the driving connecting rod, and a second stop block is provided at the first end of the fork arm; when an angle between the driving connecting rod and the fork arm is a predetermined angle, the first stop block and the second stop block abut against each other, so that the angle between the driving connecting rod and the fork arm remains the predetermined angle; wherein, the predetermined angle is greater than or equal to 160 degrees and less than or equal to 200 degrees.
